# EUROPEAN PATENT APPLICATION

(11) **EP 0 775 967 A1**
(43) Date of publication of application: **28.05.1997**
(21) Application number: 96402467.3
(22) Date of filing: 18.11.1996
(51) Int. Cl.: G06K 11/18

(54) **Cordless mouse**

(30) Priority: 21.11.1995 JP 337621/95
(71) Applicant: Bitex Limited Company, Funabashishi, Chiba-ken (JP)
(72) Inventor: Shimono, Heihachi, Funabashishi, Chiba-ken (JP)
(74) Representative: Fort, Jacques

(57) **Abstract**

A mouse mat has an active function that receives signals transmitted from the cordless mouse. The signal receiving mat is provided with a receiving coil which resonates with a high frequency electromagnetic field of a transmission signal of the cordless mouse. The cordless mouse is provided with a transmission coil of which resonance frequency is same with the receiving coil. The distance between the cordless mouse and the receiving mat is close and the placement relation of the cordless mouse with the receiving mat is confined. So the electromagnetic coupling between the receiving coil and the transmission coil is strong.

## Description

### BACKGROUND OF THE INVENTION

### Field of the invention

This invention is related to a mouse which is a kind of pointing device used with a computer and a mat on which the mouse is operated. Especially a cordless mouse that a cord connected to the computer is removed generates electromagnetic signals of mouse information and send them to an active mat, and an active mat which has an electromagnetic induction coupling means acts as a signal receiver of the mouse signa

### Description of the related art

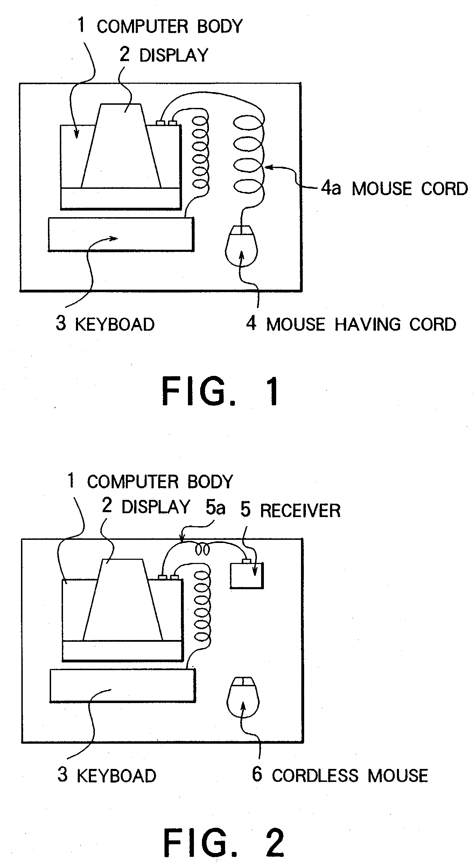

A mouse of prior art has a cord connected to a computer. The mouse having the cord is shown in figure 1. The computer system is composed of a computer body 1, a display 2, a keyboard 3, a mouse 4 having cord, a cord 4a for connecting the mouse 4 to the computer body 1.

Signals generated by the mouse 4 are transmitted to the computer body 1 through the cord 5a. On this system, when an operator moves the mouse 4, the cord obstructs to operate the mouse 4.

Therefore a cordless mouse has been developed. In figure 2, a computer system having the cord less mouse is shown. The computer system is composed of a computer body 1, a display 2, a keyboard 3, a receiver 5 for receiving signals transmitted from a cordless mouse 6, a cord 5a for connecting the receiver 5 to the computer body 1. a cordless mouse 6.

Electromagnetic wave signal transmitted from the cordless mouse 6 is received by the receiver 5 . And the signal is transmitted to the computer body 1 from the receiver 5 through the cord 5a. The system is easy to operate the mouse 6 by reason that the cord obstructing the operation of mouse does not exist..

But there is a problem on the cordless mouse system of the prior art.

On the prior art cordless system, the receiver 5 and the cordless mouse 6 are placed separately, and the distance between the receiver and the cordless mouse 6 is not close. The placement relation between the receiver 5 and the mouse 6 are taken variously according to a setting circumstance. Therefor it happens for the signal not to transmit exactly to the computer 1 in a wrong placement relation of the cordless mousse 6 with the receiver 5. So a great transmission power has to be provided for the cordless mouse system for considering to the worst placement relation of the cordless mouse 6 with the receiver 5. And so, it is necessary for cordless mouse systems to be assigned with deferent communication channels for preventing the interference between them. And moreover the cordless system is made so as it does not conflict with the electric wave law. And the life of the battery loaded in the cordless mouse is short because of a great transmission power.

### SUMMARY OF THE INVENTION

In this invention, a mat, which has been used only for preventing the glide of the mouse ball in the prior art, has an active function that receives signals transmitted from the cordless mouse. The mat receiving signals from the cordless mouse ( later described as a receiving mat) is provided with a receiving coil which resonates with electromagnetic wave of a transmission frequency of the cordless mouse. The cordless mouse is provided with a transmission coil of which resonance frequency is same with the receiving coil. The cordless mouse moves on the receiving mat, therefore the distance between the cordless mouse and the receiving mat is close and the placement relation of the cordless mouse and the receiving mat is confined. So the electromagnetic coupling between the receiving coil and the transmission coil is strong and problems mentioned above are resolved.

The receiving mat is provided with a conductive plate 10 on its lower surface and a short ring 11. The reason why they are set is discussed later.

When the mouse ball is composed of magnetic materials and placed at a center of the transmission coil Lt and surrounded by it, namely the mouse ball is used as a magnetic core of the transmission coil Lt, the induction coupling between the transmission coil Lt and the receiving coil Lr is the best.

### BRIEF DESCRIPTION OF THE DRAWINGS

Referring to the figure 1, there is shown a computer system of prior art on which a mouse is connected with a cord to the computer.

Referring to the figure 2, there is shown a cordless mouse computer system of prior art.

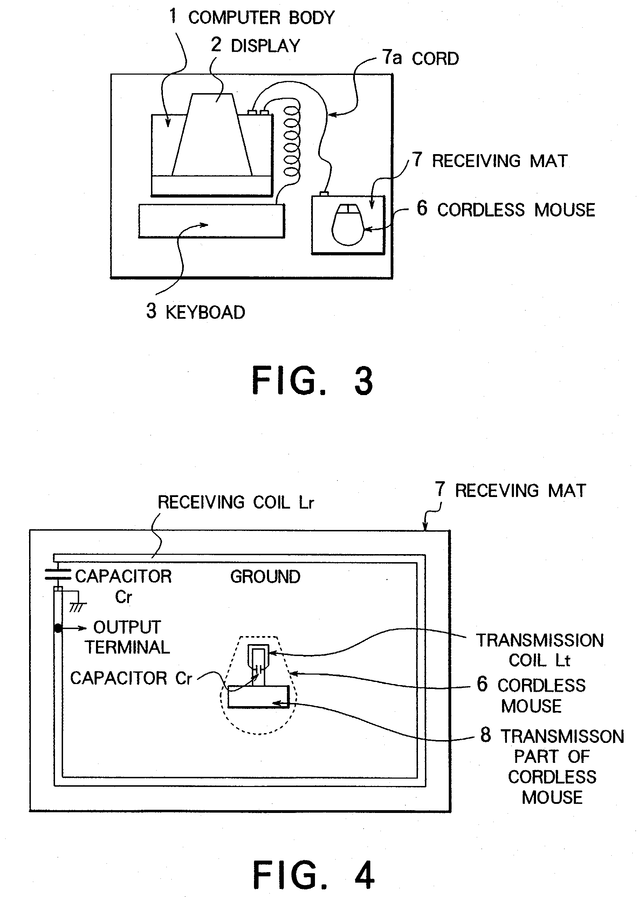

Referring to the figure 3, there is shown a cordless mouse computer system of this invention.

Referring to the figure 4, there is shown a relation of a receiving mat with a cordless mouse of this invention, and a relation of the receiving coil with the transmission coil.

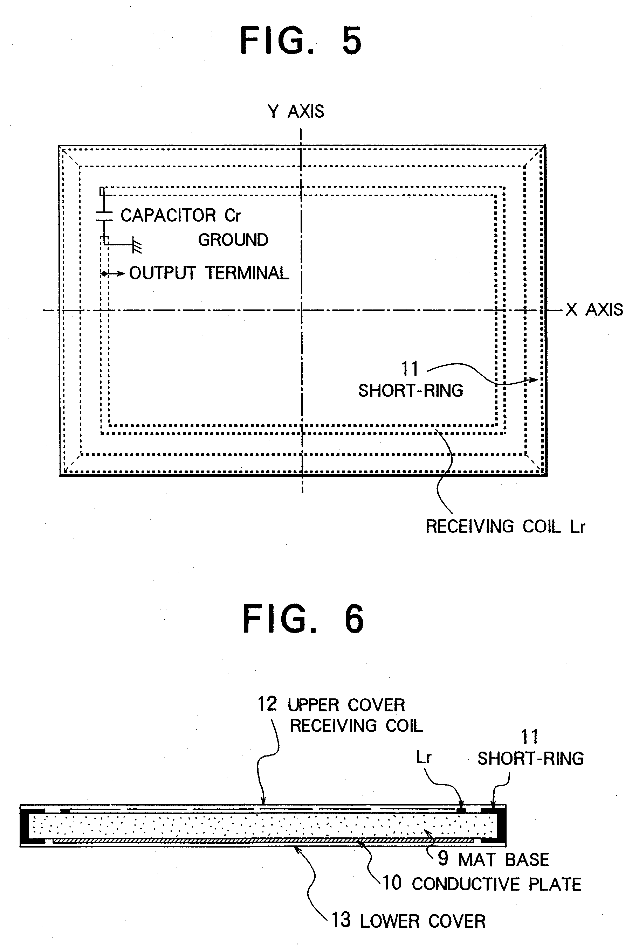

Referring to the figure 5, there is shown a plane chart of the receiving mat.

Referring to the figure 6, there is shown a cross section of X axis of the receiving mat.

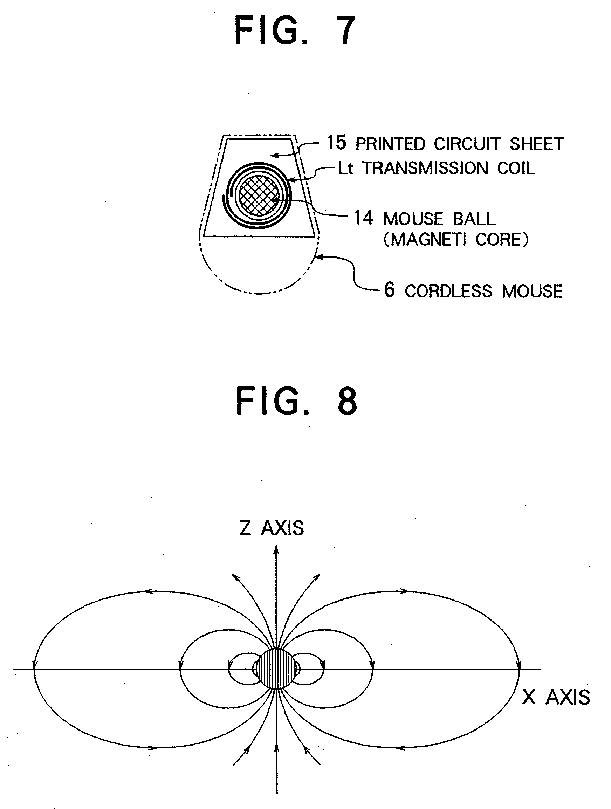

Referring to the figure 7, there is shown a drawing of an example of relation of the transmission coil with the mouse ball of magnetic core of this invention.

Referring to the figure 8 there is shown a drawing of magnetic field distribution generated by the spherical magnetic core of the mouse ball.

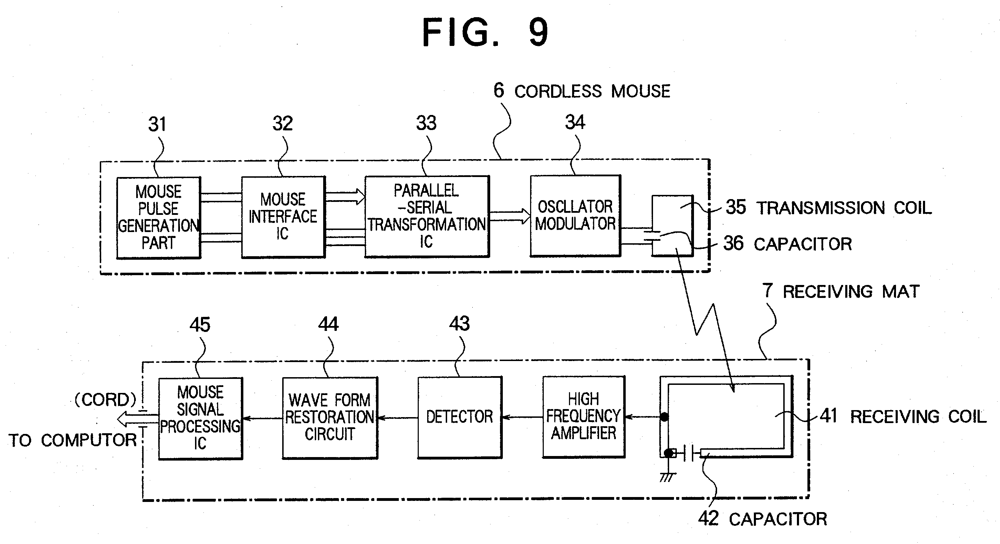

Referring to the figure 9, there is shown a drawing of circuit blocks of the cordless mouse and the receiving mat.

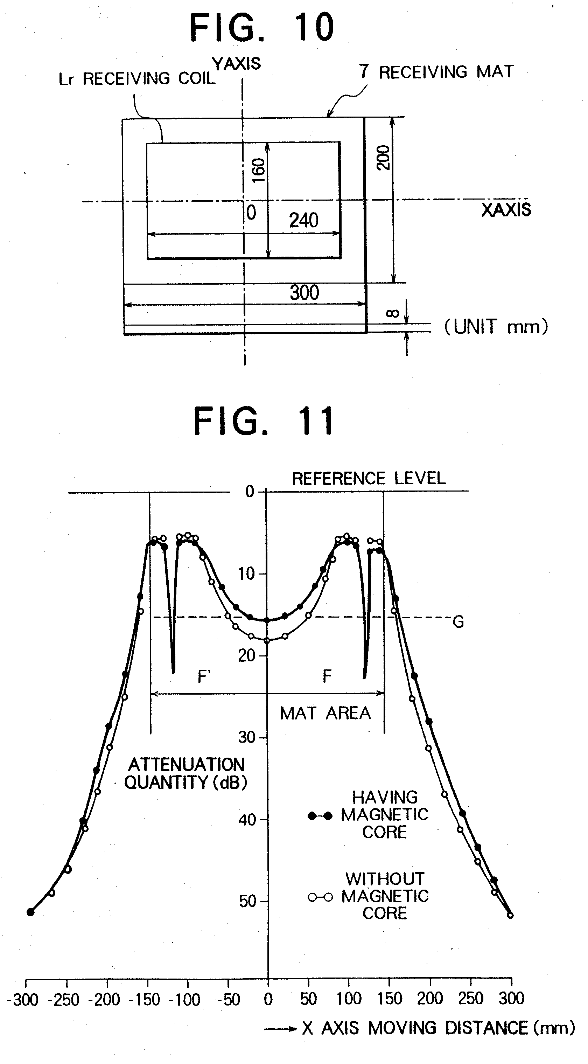

Referring to the figure 10, there is shown an example of the receiving mat used in an experiment

Referring to the figure 11, there is shown a graph of the result that the attenuation quantity of transmission power from the cordless mouse to the receiving mat is measured by moving the cordless mouse on the receiving mat.

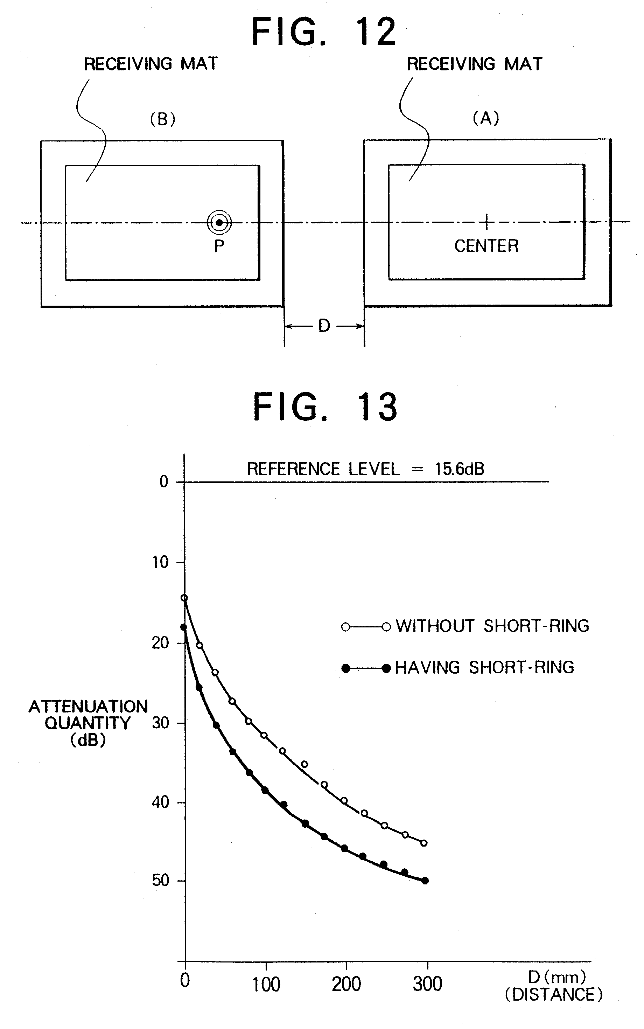

Referring to the figure 12, there is shown a placement relation of two cordless mouse systems used in the experiment.

Referring to the figure 13, there is shown a graph of interference between two cordless systems measured by changing the distance between receiving mats

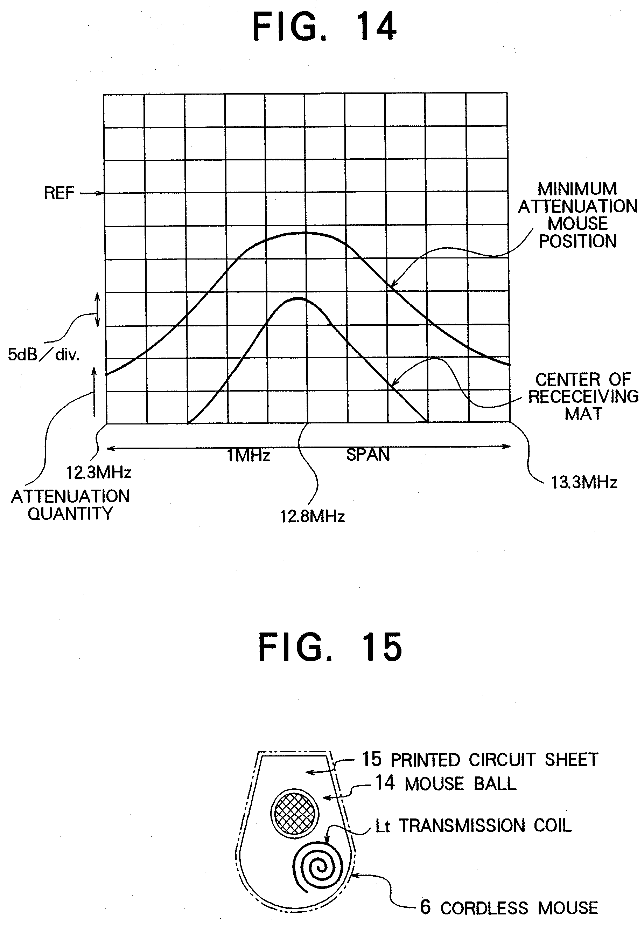

Referring to the figure 14, a graph of resonance characteristic of transmission power from the cordless mouse to the receiving mat wherein one is that of a mouse position of the receiving mat center and the other is that of a minimum attenuation mouse position on the receiving mat..

Referring to the figure 15, there is shown a drawing of another example of relation of the transmission coil with the mouse ball of this invention.

### DESCRIPTION OF THE PREFERRED EMBODIMENT

As shown in figure 3, the cordless mouse system of this invention is composed of a computer body 1, a display 2, a keyboard 3, a cordless mouse 6, a receiving mat 7 connected to the computer body 1 with a cord 7a.

As shown figure 4, the receiving mat 7 is provided with a receiving coil Lr, capacitor Cr for resonance. The cordless mouse 6 is provided with transmission coil Lt, capacitor Ct for resonance and the oscillation circuit block 8 of cordless mouse 6.

The mouse 6 moves on the receiving mat 7, and generates mouse signals. The signal is transformed to the electromagnetic field of a high frequency which resonates in the transmission coil Lt and resonance capacitor Ct. And the high frequency electromagnetic field is received by the receiving coil Lr and resonance capacitor Cr with electromagnetic induction coupling. The signal received by the receiving mat 7 is transmitted to the computer body 1 through the cord 7a.

The cordless mouse 6 and the receiving mat 7 are positioned closely, and the placement relation between the cordless mouse 6 and the receiving mat 7 is confined. So the signal of the cordless mouse 6 can be transmitted surely to the receiving mat 7.

As shown in figure 5, the receiving mat 7 is provided with a receiving coil Lr, resonance capacitor Cr and a short ring 11. The received signal of the receiving coil Lt is output from its output terminals.

As shown in a cross section of the mat of figure 6, the mat 7 is provided with a mat base of dielectric material, a receiving coil Lr, resonance capacitor Cr, a conducting plate 10, a short ring 11, an upper cover 12 and a lower cover 13.

The mat base 9 is composed of a low loss in a high frequency range like foaming polystyrol etc. The thickness of the mat base 9 is chosen suitably.

The receiving coil Lr and the resonance capacitor Cr are set on the mat base 9. The conductive plate 10 made of a tinplate or a copper plate etc. is set on the lower side of the mat base 9, and the short ring 11 is set for surrounding a circumference of mat base 9, and contacted electrically to a point of the conductive plate 10. It is effective for the short ring 11 to have its large cross-sectional area and be composed of a high electric conductivity material like copper etc. to make its electric conductivity lower.

Now the reason why the conductive plate 10 and the short-ring 11 are set is explained. If there is not the conductive plate 10, the resonance frequency is changed according to the using circumstance whether this cordless mouse system is used on a metal desk or a wood desk. The conductive plate 10 prevents the phenomena of frequency changing, namely the resonance frequency of this cordless mouse system having the conductive plate 10 is not affected by the table material, and it is invariable even if the material is wood or metal. And the conductive plate 10 prevents interference with external noise. Similarly the short-ring 11 prevents also for the receiving signal to be disturbed by external noise.

The conductive plate 10 is attached to the mat base 9 by using adhesive or mechanically. Or Some hooks are formed to the conductive plate 10. And some through holes for penetrating hooks are formed at corresponding positions of the mat base 9 corresponding to the hook. The conductive plate 10 is laid on the mat base 9 and hooks are penetrated through holes of the base mat 9, and the top of hooks are bent for fixing.

The way for fixing the receiving coil to the base mat 9 is following. A groove for setting the receiving coil Lt is formed on the base mat 9 and the receiving coil 9 is inlaid in the groove, and the receiving coil is fixed by using by a adhesive tape etc.

The upper cover 12 is provided for smoothing the movement of mouse ball rotation, and its material is the dielectric of a low loss at a high frequency. The lower cover 13 is set for protecting the inner circuit parts of the receiving mat 7. The material is vinyl system materials etc.

As shown figure 7, the cordless mouse 6 of this embodiment is provided with a mouse ball 14, a printed circuit sheet 15 and a transmission coil Lt.

As an example, the transmission coil Lt is placed concentrically with the mouse ball center and the mouse ball 14 is composed of magnetic materials like ferrite. And it is used not only for measurement of the rotation quantity of the mouse ball of its proper purpose but also as a magnetic core of the transmission coil Lt. Therefore in this embodiment, it is important that the shape of the magnetic core is sphere. The magnetic field distribution caused by the sphere magnetic core is actively used for coupling of the transmission coil and the receiving coil by electromagnetic induction. A transmission coil Lt formed on a printed circuit sheet 15 is set so as to surround the mouse ball 14. The type of the transmission coil Lt is spiral coil formed on the printed circuit sheet 15 or solenoid coil made on the printed circuit sheet 15 etc. The magnetic field generated by the transmission coil Lt having the spherical magnetic core 14 is distributed as shown in figure 8. Strictly speaking, the lower part is a little distorted by influence of the conductive plate 10, but it does not affect the coupling between the transmission coil Lt and the receiving coil Lr.

The signal generated in the cordless mouse 6 is sent to the computer by passing each circuit block in figure 9. As shown in figure 9, the cordless mouse is provided with a mouse pulse generation block, a mouse interface IC, a parallel-serial transformer IC, an oscillator, amodulator and a transmission coil Lt. The receiving mat 7 is provided with a receiving coil Lr, a high frequency amplifier, a detector, a wave form restoration circuit and a mouse signal processing IC.

The position and movement information and the button click information of the cordless mouse 6 are generated in the mouse pulse generation circuit block, and the signal inputs to the mouse interface. And the signal is transformed to a chain of serial pulse from parallel pulse by the parallel-serial transformer IC. Various modulation methods can be used for modulating the oscillation with the pulse. The most simple and low-cost method is pulse amplitude modulation method that makes the oscillation itself of the oscillator on or off. The pulse amplitude modulation method is suitable for the cordless mouse of this invention.

An example of resonance characteristics of transmission power from the transmission coil to the receiving coil is shown in figure 14. C in figure 14 shows the characteristic that the cordless mouse is placed at the center of the receiving mat 7, and D in figure of 14 shows the characteristic that the mouse is placed at a minimum attenuation mouse position. The frequency corresponding to the peak is 12.8MHz. A span of horizontal axis is 1 MHz and a division is 100 KHz. Vertical axis is the attenuation quantity of transmission power and REF of the vertical axis is corresponding to 0 dB. A division of the vertical axis is 5 dB.

As shown C of figure 14, in a situation that the transmission coil is placed at the center of the receiving coil, the coupling is the weakest, and the 3 dB attenuation band width is about l70 KHz. The band width is sufficiently wide for the transmission of amplitude modulation signal of mouse information.

A part of the magnetic field generated by the transmission coil having spherical magnetic core crosses with the receiving coil, and it generates the electromotive force to the receiving coil. The electromotive force is output from the output terminals of receiving mat, and the signal is transmitted to the high frequency amplifier and the signal processing circuit. The signal is demodulated in the signal processing circuit. and the demodulated signal of the mouse information code is sent to the computer. There are two kinds of computer. One can operate directly by accepting serial data, and the other can operate only by inputting parallel data. When the computer is a type of the latter, it is necessary for the receiving mat to have a serial- parallel transformation circuit block, and the serial data has to be transformed to parallel data for sending to the computer.

The following description is an experimental result to obtain a minimum condition for practicing this invention.

It is considered that the attenuation is the greatest at the center of mat as shown in figure 14. The experiment has been done by using the greatest mat size considered in practice, and done under the worst condition that the cordless mouse is placed at the center of the receiving mat. The resonance frequency of the transmission coil and the receiving coil is 12.8 MHz.

The material of a table on which the receiving mat is placed may be wood, plastics and metal etc. The resonance frequency of the transmission coil and the receiving coil may be changed by influence of the material, and as the result, it happens for the receiving sensitivity to be lowered. In consideration of it, the receiving mat 7 of this invention is provided with a conductive plate 10 at the lower side of the receiving mat 7. Whatever the table material is, the receiving sensitivity is invariable because of existence of the conductive plate 10.

Figure 10 shows an example of an external size of receiving mat and the size of receiving coil used in an experiment. The external size of mouse ball of cordless mouse is 22 mm, and the transmission coil is a solenoid coil of inner size of 36 mm. The figure 11 shows the experimental result of measurement of transmission power attenuation ( reciprocal of the gain ) from the transmission coil to the receiving coil. The experiment is done with the mat shown in figure 10, and the center of the transmission coil moves on the X axis shown in figure 10, and the transmission power attenuation is measured at each point.

When the transmission coil is placed at a center of receiving mat, amount of magnetic field across the receiving coil of the magnetic field generated from the cordless mouse is the less. Therefore it may be supposed that the power transmission attenuation is the most, when the cordless mouse is placed at the center of the receiving mat. The experimental result shows the fact.

The experiment is done with two cases, one is by using a cordless mouse having a spherical magnetic core, and the other is by using a cordless mouse of which ball is not magnetic material. The figure 10 shows that in a case using the spherical magnetic core, the transmission power attenuation is less than in a case using a mouse ball of non magnetic material. The reason is that the magnetic field generated by the spherical magnetic core prolongs to X axis and Y axis, and does not prolong to Z axis, in other word the magnetic field distributes as a form of distorted sphere of long to horizontal direction and short to vertical direction. Therefore, as an effect of use of the spherical magnetic core, the maximum transmission power attenuation decreases. The effect using the spherical magnetic core is not only it, but causes other many effects that the transmission power attenuation quantity is isotropic for 360 degree, Qvalue, which shows a quality of the transmission coil, is increased and the oscillation efficiency is heightened, and the printed circuit can be easily designed etc. Like this, the many effect caused by the spherical magnetic core of the mouse ball can be cited.

As shown figure 11, when the transmission coil is placed on the center K, K' of the receiving coil line ( see (A), (B) of figure 11), the magnetic field crosses symmetrically the receiving coil line, therefore the electromotive force produced by the inner magnetic field and the outer magnetic field around of the coil line are same and the direction is inverse, so the electromotive force is canceled. The dips of F and F' point are caused because of it. But the width of the dip is 2 mm at the attenuation level G of the center of mat, therefore the width is very small and it is allowable in practice.

Figure 11 shows also the transmission power transmission power attenuation characteristic in case that the transmission coil is positioned at the outside of mat. The direction of the electromotive force is inverse, when the cordless mouse is placed out side of the receiving coil, but this is not serious in a case of pulse amplitude modulation.

For doing this experiment, a mat having no short-ring and no receiving coil is placed adjacent to the receiving mat 7 for measuring to keep same mouse height. The result shows, as shown in figure 11, that the transmission power attenuation quantity decreases rapidly according to the distance enlarging. This results that the cordless mouse system of this invention is not affected to a mutual interference between cordless mouse. The figure 11 does not show the attenuation characteristic of Y axis direction, but the characteristic of Y axis direction is fundamentally same with that of the X axis direction.

Moreover, the reason why the cordless mouse system of this invention is not interfered with an adjacent cordless mouse is shown by the following experimental result.

The figure 12 shows a placement relation of two mats for doing experiment on the mutual interference. On the experiment of figure 12, it is supposed that the mat (A) in operating is interfered from the mat (B) in operating.

The two mats are placed so as to X axis is adjusted, and the mutual interference is measured by Changing the distance D of two mats. The transmission power attenuation in case that the transmission coil is placed at a center of the mat (B) is 15.6 dB, and this level is set as a reference level. Next the transmission coil of (B) is placed at a point P that is the minimum attenuation point. And changing the distance, the transmission power attenuation from the cordless mouse at P to the receiving coil of (A) is measured. Figure 13 is the result. Two cases of experiment are done, one is a case using the mat having short-ring, and the other is a case using the mat no having short-ring. A small difference of the resonance frequency between two cases is caused, but they are readjusted for the resonance frequency of 12.8 MHz.

The short-ring is not affected with magnetic field which is closed in its inner side. Therefore, it does not affect the electromagnetic induction coupling of the receiving coil and the transmission coil which are in the inner side of the short-ring 11. But it acts as a choke coil for the magnetic field flowing to its outside of the magnetic field generated by the transmission coil and the incoming magnetic field from the external. As the result, it acts so as to prevent the magnetic field. The effect preventing external electromagnetic field is shown dearly in figure 13. It shows that the interference level is reduced to about 6 dB in a case of the mat having short ring in comparison with the mat without short-ring. This means that, in the case having the short ring, the minimum distance between the mat (A) and the mat (B) becomes a half of the case without the short ring.

Discrimination of the correct signal from the interference signal is possible by observing the level deference on the receiving mat. When the discrimination level of 40 dB is set, which is sufficient for practice, the receiving mat having short ring may adjacent each other to the distance of 12.5 cm. Namely the correct signal is not interfered in a case that the external signal level is less than 40 dB. This means that the cordless mouse system of this invention can operate surely even in condition of many computers being placed in a narrow space. And the cordless mouse of this invention is very effective under a use of this condition.

Next, a necessary transmission power of cordless mouse will be explicated. The following condition is set as the minimum transmission power in practice.

A signal to noise ( S/N ratio) at the detector is 20 dB, noise figure of the high frequency amplifier is 3 dB. Under this condition, it is necessary for the S/N ratio of the output terminal of receiving coil to be 23 dB. When a synthesis band width is 200 KHz, circumstance absolute temperature is 290 degree K, the inner noise power level is - 121 dBm. Therefore, a necessary electromotive force of output terminal is -98 dBm. When the transmission coil is placed at the center of the receiving mat, that is the greatest attenuation quantity, and the attenuation level is 16 dB, the necessary transmission power is -82 dB. This is equal to 6.31 × 10⁻⁸ µw, and this fully low power far under the rule of electric wave law.

The reason why the information transmission is possible by such a small power is that the attenuation quantity of transmission system of this invention is very small. The battery current necessary for operating the cordless mouse is for photodiode current to generate photo pulse, IC current etc. except the transmission power. The current except for the transmission power is much greater than the transmission current of cordless mouse. Therefore, the transmission power does not affect for the battery life.

The above explanation of the transmission power is a theoretical minimum power. In practice, interference with external radio wave and external noise etc. must be considered in for making this cordless system, therefore it is better to design the greater transmission power than the above mentioned transmission power within the rule of electric wave law and the battery life etc.. When it is designed so, the receiving sensitivity is suppressed, but it can resist stronger for the external noise.

On the above description, a cordless mouse having a magnetic material mouse ball is only disclosed. But, as shown in figure 11, this invention can be realized effectively even if the mouse ball is not magnetic material. So the cordless mouse of which mouse ball is not magnetic material is also involved within a scope of this invention.

Moreover, on the above mentioned embodiment, a cordless mouse that the transmission coil is formed so as to surround the mouse ball is only described. Nevertheless it, this invention can be realized with the other formation of transmission coil. Namely, the receiving coil position that does not surround the mouse ball as shown figure 15 is also fully effective for realizing this invention.

In figure 15, the transmission coil Lt is formed on a printed circuit sheet 15 and the position is not concentric with a center of the mouse ball 14.

The transmission coil Lt generates electromagnetic field based on the mouse information as well as the transmission coil of figure 7, and it is coupled with the receiving coil of the receiving mat with electromagnetic induction. And the received signal of mouse information is transferred into the computer connected to the receiving mat.

While this invention has been described with reference to illustrative embodiments, it is not limited to the disclosed embodiments. Various modifications will be apparent to persons skilled in the art of this invention in range of appended claims.

## Claims

1. A cordless mouse system comprising of:
a cordless mouse transmitting the mouse information by electromagnetic induction and a mat receiving the mouse information by electromagnetic induction;
the cordless mouse having a signal transmission means for sending the mouse information to the mat by electromagnetic induction;
the mat having a means for receiving the mouse information by electromagnetic induction, signal detecting means and an interface means for connecting to a computer.

2. A cordless mouse of claim 1 wherein the cordless mouse is composed of a mouse ball and a transmission coil.

3. A cordless mouse of claim 2 wherein the transmission coil is a spiral coil.

4. A cordless mouse of claim 2 wherein the coil is a solenoid coil.

5. A cordless mouse of claim 2 wherein the transmission coil is set around the mouse ball.

6. A cordless mouse of claim 2 wherein the mouse ball is set outside of the transmission coil.

7. A cordless mouse of claim 5 wherein the mouse ball is composed of magnetic material.

8. A mat of claim 1 wherein a receiving coil is set.

9. A mat of claim 1 whereof a short-ring is set on the peripheral of the mat.

10. A mat of claim 1 whereof a conductive plate is set on a lower surface side.
